Europäisches Patentamt

European Patent Office

Office européen des brevets

(11) Veröffentlichungsnummer : **0 048 349**
**B1**

(12) # EUROPÄISCHE PATENTSCHRIFT

(45) Veröffentlichungstag der Patentschrift :
**18.01.84**

(21) Anmeldenummer : **81106581.2**

(22) Anmeldetag : **25.08.81**

(51) Int. Cl.³ : **C 08 L 21/00** // (C08L21/00,
11/00, 23/28, 23/24, 61/04)

---

(54) **Vulkanisierbare Kautschukmischung.**

---

(30) Priorität : **19.09.80 DE 3035510**

(43) Veröffentlichungstag der Anmeldung :
**31.03.82 Patentblatt 82/13**

(45) Bekanntmachung des Hinweises auf die Patenterteilung : **18.01.84 Patentblatt 84/03**

(84) Benannte Vertragsstaaten :
**BE DE FR GB IT NL**

(56) Entgegenhaltungen :
**FR-A- 1 585 214**
**GB-A-  921 511**

(73) Patentinhaber : **METZELER KAUTSCHUK GMBH**
**Gneisenaustrasse 15**
**D-8000 München 50 (DE)**

(72) Erfinder : **Schnetger, Jochen, Dr.**
**Im Obstgarten 9**
**D-8990 Lindau-Bodolz (DE)**
Erfinder : **Stecher, Roland**
**Amselweg 8**
**D-8991 Rehlings (DE)**
Erfinder : **Thiel, Klaus**
**Schönauerstrasse 22**
**D-8990 Lindau (DE)**

(74) Vertreter : **Michelis, Theodor, Dipl.-Ing.**
**Gneisenaustrasse 15**
**D-8000 München 50 (DE)**

Vulkanisierbare Kautschuk-Mischung

Die Erfindung betrifft eine vulkanisierbare Kautschuk-Mischung zur Herstellung eines lederharten Gummis mit einer Polymer-Basis, mit Schwefel, mit Phenolformaldehyd-Verstärkerharzen, mit Beschleunigern und mit Zinkoxid.

Eine solche Kautschukmischung kann zur Herstellung eines sogenannten « Verbundprofils » verwendet werden, das durch gemeinsame Extrusion und Vulkanisation von zwei verschiedenen Gummiqualitäten angefertigt wird, wie es in dem DE-GM 7 510 829 erläutert wird. Dieses Verbundprofil weist einen Bereich aus lederhartem Gummi, der als Klemmteil dient, und einen zweiten, einstückig damit ausgebildeten Bereich aus üblichem, weichen, gummielastischen Gummi auf.

Es ist bereits eine vulkanisierbare Kautschukmischung für die Herstellung eines solchen lederharten Gummis vorgeschlagen worden, bei der 12 bis 40 Teile Schwefel verwendet werden. Nachteilig bei der Verarbeitung einer solchen Kautschukmischung ist, daß von der maschinentechnischen Seite her ein genau definierter Ausheizgrad sehr exakt eingehalten werden muß. Selbst bei kleinsten Abweichungen kommt es zu einer Versprödung und einer Splitterung des lederharten Gummis und damit der eigentlichen Klemmbereiche des Verbundprofils, so daß es beim Stanzen und Schneiden des Verbundprofils zu Problemen kommt. Außerdem entsteht bei der Herstellung und Verarbeitung dieser Mischungen Schwefeldioxid, so daß immer eine starke, unangenehme Rauchentwicklung auftritt.

Der Erfindung liegt deshalb die Aufgabe zugrunde, eine vulkanisierbare Kautschuk-Mischung der angegebenen Gattung zu schaffen, bei der die oben erwähnten Probleme nicht auftreten.

Insbesondere soll eine vulkanisierbare Kautschukmischung vorgeschlagen werden, die zu lederhartem Gummi mit erhöhter Zähigkeit mit ausreichender Härte führt, so daß das Verbundprofil gut geschnitten und gestanzt werden kann, es also nicht zu einer Zersplitterung im Klemmbereich kommt.

Dies wird erfindungsgemäß durch folgende Bestandteile erreicht :

    a) 100 Teile Polymer-Basis mit
    b) 20-40 Teile polarer Kautschuk, der unter Vulkanisationsbedingungen saure Gruppen abspaltet,
    c) 15-50 Teile Phenolformaldehyd-Verstärkerharz,
    d) 0,5-4 Teile Hexamethylentetramin, und
    e) 0,5-3 Teile Schwefel.

Zweckmäßige Ausgestaltungen sind in den Unteransprüchen zusammengestellt.

Die mit der Erfindung erzielten Vorteile beruhen auf folgender Funktionsweise : Der lederharte Bereich wird nicht durch eine hartgummiähnliche Mischung, sondern mittels eines vernetzbaren Phenolformaldehyd-Verstärkerharzes hergestellt, wobei als Vernetzer Hexamethylentetramin verwendet wird. Beim Einsatz von vernetzbaren Verstärkerharzen auf der Basis Phenolformaldehyd für die drucklose Vulkanisation tritt jedoch während des Heizvorgangs beim Vulkanisieren in der kontinuierlichen Anlage eine zu starke Porenbildung auf, die durch die Abspaltung von Ammoniak bei der Reaktion des Phenolharzes mit dem Vernetzer verursacht ist.

Diese Porenbildung wird nun durch Zusatz eines polaren Kautschuks zurückgedrängt, der unter Vulkanisationsbedingungen Säure-Gruppen abspaltet ; diese Säure-Gruppen beschleunigen auf katalytischem Wege die Harzvernetzung so stark, daß keine merkliche Porenbildung mehr auftritt. Die hergestellten Profile können als extrem porenarm bezeichnet werden, wodurch wiederum die Möglichkeit besteht, sehr maßgenaue Profile anzufertigen. Der lederharte Klemmbereich der ausvulkanisierten Profile zeigt bei ausreichender Härte eine erhöhte Zähigkeit beim Schneiden und Stanzen, so daß es insbesondere im Klemmbereich nicht zum Splittern kommt. Außerdem schrumpfen diese Profile nach der Wärmealterung extrem wenig. Durch Versuche konnte nachgewiesen werden, daß nach einer 16-stündigen Wärmealterung bei 90 °C die Schrumpfung nur 0,1 bis 0,3 % beträgt. Die Verwendung eines relativ hohen Anteils an Phenolformaldehyd-Verstärkerharzen führt zu einer sehr guten Spritzbarkeit der Kautschuk-Mischung. Da Vulkanisationssysteme in üblicher Dosierung auch der Schwefelmenge eingesetzt werden können, läßt sich der Ausheizgrad exakt durch die vorgegebene Maschinentechnik einhalten. Und schließlich entsteht kein Schwefeldioxid mehr, so daß sich die oben erwähnte, lästige Rauchentwicklung vermeiden läßt.

Als polarer Kautschuk können Polychloropren, chlorsulfoniertes Polyethylen oder chloriertes Polyethylen, allein oder im Gemisch, eingesetzt werden.

Die Erfindung wird im folgenden anhand eines Ausführungsbeispiels näher erläutert.

Eine bevorzugte Ausführungsform einer erfindungsgemäßen Kautschuk-Mischung enthält die folgenden Bestandteile :

    20-40 Teile Polychloropren
    60-80 Teile Acrylnitrilkautschuk
    90-110 Teile Ruß
    25-40 Teile Novolak
    16-20 Teile Weichmacher
    1-2 Teile Stearinsäure
    5-20 Teile Kreide
    1-2 Teile Alterungsschutzmittel
    4-8 Teile Wachs
    1-2 Teile Magnesiumoxid
    1,5-3 Teile Hexamethylentetramin

4-8 Teile Zinkoxid

6-10 Teile Trocknungsmittel

1-2 Teile Tetramethylthiorammonosulfid als Thioram-Beschleuniger,

1-2 Teile Schwefel

0,5-1,5 Teile Dibenzothiazyldisulfid (MBTS) als Mercapto-Beschleuniger.

Das Polychloropren kann bei Bedarf auch durch chlorsulfoniertes Polyethylen oder chloriertes Polyethylen ersetzt werden.

Als Novolak wird die Substanz verwendet, die unter der Bezeichnung « Alnovol VPN 16 » als Versuchsprodukt von der Hoechst AG erhältlich ist. Diese Substanz hat einen Schmelzpunkt von 80-90 °C, gemessen nach der Kappilarmethode nach DIN 53181, eine dynamische Viskosität von 600 bis 1 000 (cP) mPas (20 °C) gemessen nach DIN 53177 in einem 50 %igen Gemisch mit Ethylglykol und eine Dichte von 1,1 g/ml bei 20 °C.

Diese Kautschuk-Mischung wurde gemeinsam mit der Kautschuk-Mischung für den Weichgummi extrudiert und dann als Verbundprofil vulkanisiert. Die Vulkanisation erfolgt zunächst in einem ersten Heißluftkanal, der auf 200 °C gehalten wurde, dann in einem zweiten Heißluftkanal, der ebenfalls auf 200 °C gehalten wurde, und schließlich in einem UHF-Kanal, der sich auf einer Umlufttemperatur von 180 °C befand. Die Energieeinspeisung für den UHF-Kanal erfolgt durch drei Magnetons, die eine Strommenge von 0,3 bis 0,4 Ampere benötigen. Die Fahrgeschwindigkeit des Verbundprofils auf der Vulkanisationsstrecke betrug 10 m/min.

Nach dem Durchlaufen der Vulkanisationskanäle wurde das Verbundprofil schlagartig auf eine relativ geringe Temperatur in der Größenordnung von 20 bis 40° abgekühlt.

**Ansprüche**

1. Vulkanisierbare Kautschuk-Mischung zur Herstellung von lederhartem Gummi mit einer Polymer-Basis, mit Schwefel, mit Phenolformaldehyd-Verstärkerharzen, mit Beschleunigern und mit Zinkoxid, gekennzeichnet durch folgende Bestandteile :

a) 100 Teile Polymer-Basis mit

b) 20-40 Teile polarer Kautschuk, der unter Vulkanisationsbedingungen Säure-Gruppen abspaltet,

c) 15-50 Teile Phenolformaldehyd-Verstärkerharz,

d) 0,5-4 Teile Hexamethylentetramin, und

e) 0,5-3 Teile Schwefel.

2. Kautschuk-Mischung nach Anspruch 1, dadurch gekennzeichnet, daß die Polymer-Basis 60 bis 80 Teile Akrylnitrilkautschuk enthält.

3. Kautschuk-Mischung nach einem der Ansprüche 1 oder 2, dadurch gekennzeichnet, daß als polarer Kautschuk 20 bis 40 Teile Polychloropren, chlorsulfoniertes Polyethylen oder chloriertes Polyethylen oder eine Mischung dieser Kautschuke verwendet werden.

4. Kautschuk-Mischung nach einem der Ansprüche 1 bis 3, gekennzeichnet durch 1 bis 2 Teile Schwefel.

5. Kautschuk-Mischung nach einem der Ansprüche 1 bis 4, gekennzeichnet durch 1,5 bis 3 Teile Hexamethylentetramin.

6. Kautschuk-Mischung nach einem der Ansprüche 1 bis 5, gekennzeichnet durch 25 bis 40 Teile Phenolformaldehyd-Verstärkerharz.

7. Kautschuk-Mischung nach Anspruch 6, dadurch gekennzeichnet, daß als Phenolformaldehyd-Verstärkerharz Novolak verwendet wird.

8. Kautschuk-Mischung nach Anspruch 7, dadurch gekennzeichnet, daß Novolak mit einem Schmelzpunkt von 80 bis 90 °C, gemessen mit der Kappilarmethode nach DIN 53181, mit einer dynamischen Viskosität von 600-1 000 (cP) mPas (20 °C) nach DIN 53177 in einer 50 %igen Mischung mit Ethylglykol, und mit einer Dichte von 1,1 g/ml bei 20 °C verwendet wird.

**Claims**

1. A vulcanisable rubber mixture for the production of leather-hard rubber having a polymer base, with sulphur, phenolformaldehyde reinforcer resins, accelerators and zinc oxide, characterised by the following ingredients :

a) 100 parts of polymer base with

b) from 20 to 40 parts of polar rubber which splits off acid groups under vulcanisation conditions,

c) from 15 to 50 parts of phenolformaldehyde reinforcer resins,

d) from 0.5 to 4 parts of hexamethyltetramine, and

e) from 0.5 to 3 parts of sulphur.

2. A rubber mixture according to claim 1, characterised in that the polymer base contains from 60 to 80 parts of acrylonitrile rubber.

3. A rubber mixture according to one of claims 1 or 2, characterised in that from 20 to 40 parts of polychloroprene, chlorosulphonated polyethylene or chlorinated polyethylene or a mixture of these rubbers are used as the polar rubber.

4. A rubber mixture according to one of claims 1 to 3, characterised by 1 to 2 parts of sulphur.

5. A rubber mixture according to one of claims 1 to 4, characterised by from 1.5 to 3 parts of hexamethylenetetramine.

6. A rubber mixture according to one of claims 1 to 5, characterised by from 25 to 40 parts of phenolformaldehyde reinforcer resin.

7. A rubber mixture according to claim 6, characterised in that novolak is used as phenolformaldehyde reinforcer resin.

8. A rubber mixture according to claim 7, characterised in that novolak is used which has a melting point of from 80 to 90 °C, measured by the capillary method according to DIN 53 181, has a dynamic viscosity of from 600 to 1 000 mPas (20 °C) (cP) according to DIN 53 177 in a 50 % mixture with ethyl glycol, and has a density of 1.1 g/ml at 20 °C.

**Revendications**

1. Mélange de caoutchouc pouvant être vulcanisé, pour la préparation d'une gomme ayant la dureté du cuir, et comprenant une base en polymère, du soufre, des résines de renfort en phénolformaldéhyde, des accélérateurs et de l'oxyde de zinc, caractérisé par les constituants suivants :

   a) 100 parties de base en polymère avec
   b) de 20 à 40 parties de caoutchouc polaire qui libère des groupes acides dans des conditions de vulcanisation,
   c) de 15 à 50 parties de résine de renfort en phénolformaldéhyde,
   d) de 0,5 à 4 parties d'hexaméthylène-tétramine, et
   e) de 0,5 à 3 parties de soufre.

2. Mélange de caoutchouc suivant la revendication 1, caractérisé en ce que la base en polymère contient de 60 à 80 parties de caoutchouc acrylonitrile.

3. Mélange de caoutchouc suivant l'une des revendications 1 ou 2, caractérisé en ce qu'est utilisé, comme caoutchouc polaire, de 20 à 40 parties de polychloroprène, de polyéthylène chlorosulfoné ou de polyéthylène chloré, ou d'un mélange de ces caoutchoucs.

4. Mélange de caoutchouc suivant l'une des revendications 1 à 3, caractérisé par 1 à 2 parties de soufre.

5. Mélange de caoutchouc suivant l'une des revendications 1 à 4, caractérisé par 1,5 à 3 parties d'hexaméthylène-tétramine.

6. Mélange de caoutchouc suivant l'une des revendications 1 à 5, caractérisé par 25 à 40 parties de résine de renfort en phénolformaldéhyde.

7. Mélange de caoutchouc suivant la revendication 6, caractérisé en ce qu'une novolaque est utilisée comme résine de renfort en phénolformaldéhyde.

8. Mélange de caoutchouc suivant la revendication 7, caractérisé en ce qu'il est utilisé une novolaque ayant un point de fusion de 80 à 90 °C, mesurée par la méthode capillaire suivant la norme DIN 53181, ayant une viscosité dynamique de 600 à 1 000 (cP) mPas (à 20 °C) suivant la norme DIN 53177 dans un mélange à 50 % avec de l'éthylglycol et ayant une masse volumique de 1,1 g/ml à 20 °C.